# EUROPEAN PATENT SPECIFICATION

(11) **EP 3 317 205 B1**
(45) Date of publication and mention of the grant of the patent: **02.01.2019**
(21) Application number: 17745501.1
(22) Date of filing: 28.06.2017
(51) Int. Cl.: B65D 75/00, B65D 65/40

(54) **RECYCLABLE PACKAGE COMPRISING A FLEXIBLE POUCH**
WIEDERVERWENDBARE VERPACKUNG MIT EINEM FLEXIBLEN BEUTEL
EMBALLAGE RECYCLABLE COMPRENANT UNE POCHE SOUPLE

(30) Priority: 06.07.2016 US 201662358642 P
(43) Date of publication of application: 09.05.2018
(73) Proprietor: Nestec S.A., 1800 Vevey (CH)
(72) Inventor: MOSSER, Sara Lynn, Nunica, Michigan 49448 (US); RODGERS, Matthew Blake, Grand Haven, Michigan 49417 (US)
(74) Representative: Rupp, Christian
(86) International application number: PCT/IB2017/053867
(87) International publication number: WO 2018/007902

(56) References cited:
- EP-A1- 0 608 801
- EP-A1- 3 009 016
- DE-U1- 8 031 188
- GB-A- 1 503 913
- US-A- 3 114 643
- US-B1- 6 280 085

## Description

### BACKGROUND

Various types of packaging for products (such as, but not limited to, food items) are well known in the art. In particular, flexible pouches are currently used in the packaging of a wide variety of products, from food and beverage products to cleaning supplies and other household items. Although flexible pouches are in wide usage, there are some drawbacks to their use relating to the ability of the flexible pouch to be recycled-in whole or in part-after use. Generally, the flexible pouches are fabricated from two or more layers of laminated materials such as polyethylene terephthalate (PET), aluminum foil, polypropylene (PP), polyethylene (PE), and other polymers and specialty materials. Although laminates made from these materials are generally thought of as being suitable for flexible pouches, laminated materials are not easily deconstructed into their constituent parts for recycling after use. GB1503913, EP30090016 and EP0608801 disclose packages of the prior art.

Therefore, there is a need in the art for new and improved flexible pouches that can be easily deconstructed into constituent parts for placement into appropriate recycling streams. It is to such recyclable flexible pouches, packaged products and kits formed therefrom, as well as methods of producing and using same, that the presently disclosed inventive concept(s) is directed.

### BRIEF DESCRIPTION OF THE DRAWINGS

Figure 1 is a perspective view of one embodiment of a flexible pouch constructed in accordance with the presently disclosed inventive concept(s).
Figure 2 is a cross-sectional view of the flexible pouch of Figure 1 taken along line 2-2, wherein the flexible pouch is in a substantially flattened condition.
Figure 3 is another cross-sectional view of the flexible pouch of Figure 1 taken along line 3-3, wherein the flexible pouch is in a substantially opened condition.
Figure 4A is a cross-sectional detailed view of the layers of material forming the flexible pouch of Figure 1 again taken along line 3-3, wherein the flexible pouch is in a substantially opened condition.
Figure 4B is a cross-sectional detailed view of an alternative embodiment of the layers of material forming the flexible pouch of Figure 1 again taken along line 3-3, wherein the flexible pouch is in a substantially opened condition.
Figure 5 is a perspective view of the embodiment of the flexible pouch of Figure 1 in a partially deconstructed configuration.
Figure 6 is a perspective view of the embodiment of the flexible pouch of Figure 1 in a substantially deconstructed configuration ready for recycling.
Figure 7 is a perspective view of an alternative embodiment of the flexible pouch of Figure 1.
Figure 8 is a perspective view of an alternative embodiment of the flexible pouch of Figure 1.
Figure 9 is a perspective view of an alternative embodiment of the flexible pouch of Figure 1.
Figure 10 is a perspective view of an alternative embodiment of the flexible pouch of Figure 1.
Figure 11 is a perspective view of an alternative embodiment of the flexible pouch of Figure 1.
Figure 12 is a perspective view of an alternative embodiment of the flexible pouch of Figure 1.

### DETAILED DESCRIPTION

Before explaining at least one embodiment of the presently disclosed inventive concept(s) in detail, it is to be understood that the presently disclosed inventive concept(s) is not limited in its application to the details of construction and the arrangement of the components or steps or methodologies set forth in the following description or illustrated in the drawings. The presently disclosed inventive concept(s) is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the presently disclosed inventive concept(s) shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which this presently disclosed inventive concept(s) pertains.

All of the articles and/or methods disclosed herein can be made and executed without undue experimentation in light of the present disclosure. While the articles and methods of the presently disclosed inventive concept(s) have been described in terms of preferred embodiments, it will be apparent to those of skill in the art that variations may be applied to the articles and/or methods and in the steps or in the sequence of steps of the method described herein without departing from the scope of the appended claims.

As utilized in accordance with the present disclosure, the following terms, unless otherwise indicated, shall be understood to have the following meanings:

The use of the word "a" or "an" when used in conjunction with the term "comprising" in the claims and/or the specification may mean "one", but it is also consistent with the meaning of "one or more," "at least one," and "one or more than one." The use of the term "or" in the claims is used to mean "and/or" unless explicitly indicated to refer to alternatives only or that the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects. For example, but not by way of limitation, when the term "about" is utilized, the designated value may vary by plus or minus twelve percent, or eleven percent, or ten percent, or nine percent, or eight percent, or seven percent, or six percent, or five percent, or four percent, or three percent, or two percent, or one percent. The use of the term "at least one" will be understood to include one as well as any quantity more than one, including but not limited to, 2, 3, 4, 5, 10, 15, 20, 30, 40, 50, 100, etc. The term "at least one" may extend up to 100 or 1000 or more, depending on the term to which it is attached; in addition, the quantities of 100/1000 are not to be considered limiting, as higher limits may also produce satisfactory results. In addition, the use of the term "at least one of X, Y, and Z" will be understood to include X alone, Y alone, and Z alone, as well as any combination of X, Y, and Z. The use of ordinal number terminology (i.e., "first," "second," "third," "fourth," etc.) is solely for the purpose of differentiating between two or more items and is not meant to imply any sequence or order or importance to one item over another or any order of addition, for example, unless specifically disclosed and discussed to the contrary.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The term "or combinations thereof" as used herein refers to all permutations and combinations of the listed items preceding the term. For example, "A, B, C, or combinations thereof" is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AAB, BBC, AAABCCCC, CBBAAA, CABABB, and so forth. The skilled artisan will understand that typically there is no limit on the number of items or terms in any combination, unless otherwise apparent from the context.

As used herein, the term "substantially" means that the subsequently described event or circumstance completely occurs or that the subsequently described event or circumstance occurs to a great extent or degree. For example, when associated with a particular event or circumstance, the term "substantially" means that the subsequently described event or circumstance occurs at least 80% of the time, or at least 85% of the time, or at least 90% of the time, or at least 95% of the time. The term "substantially adjacent" may mean that two items are 100% adjacent to one another, or that the two items are within close proximity to one another but not 100% adjacent to one another, or that a portion of one of the two items is not 100% adjacent to the other item but is within close proximity to the other item.

The term "associate" as used herein will be understood to refer to the direct or indirect connection of two or more items.

The term "recycling stream" as used herein will be understood to refer to collective mechanisms or pathways for recycling materials and/or individualized mechanisms or pathways for recycling materials, for example keeping the fiber component -- paper and cardboard - separate from containers, including glass and plastic containers and cans. With respect to plastics, the term "recycling streams" refers to the differentiated processes and mechanisms for collecting, sorting, and recycling plastic materials, for example: Type 1 polyethylene terephthalate; Type 2 high density polyethylene; Type 3 polyvinyl chloride; Type 4 low-density polyethylene; Type 5 polypropylene; Type 6 polystyrene; and Type 7 Others such as polycarbonate or acrylonitrile butadiene styrene.

The term "shelf-stable" as used herein refers to the ability of a food product to be safely stored and sold in a sealed container at room temperature while still having a useful shelf life in which the taste and nutritional aspects (i.e., nutritional integrity, nutritional potency, etc.) of the product is retained. Examples of periods considered to be a "useful shelf life" include, but are not limited to, at least about two months, at least about three months, at least about four months, at least about five months, at least about six months, and longer.

The term "complete meal" as used herein refers to a meal that is designed to provide one nutritionally-balanced serving; that is, it is not necessary to combine the complete meal with another food product to provide a meal. The term "incomplete meal" thus refers to a meal not satisfying the requirements of a complete meal, but forming a portion thereof; that is, a complete meal is formed upon combining two or more incomplete meals.

Turning now to the presently disclosed inventive concept(s), certain embodiments thereof are directed to a flexible pouch formed of one or more materials associated with one another such that the materials can be easily deconstructed and separated from one another into constituent parts for recycling after the flexible pouch has been used. Certain other embodiments of the presently disclosed inventive concept(s) are directed to packaged products produced using such recyclable flexible pouches and kits and assemblies containing such recyclable flexible pouches, while other additional embodiments are directed to methods of production and use of the above recyclable flexible pouches, packaged products, kits, and/or assemblies. The presently disclosed inventive concept(s) possesses many benefits over the prior art. For example, but not by way of limitation, the recyclable flexible pouches disclosed or otherwise contemplated herein have greater recyclability than the pouches of the prior art. Therefore, the recyclable flexible pouches disclosed or otherwise contemplated herein provide a more desirable packaging item whose constituent parts can be more easily recycled.

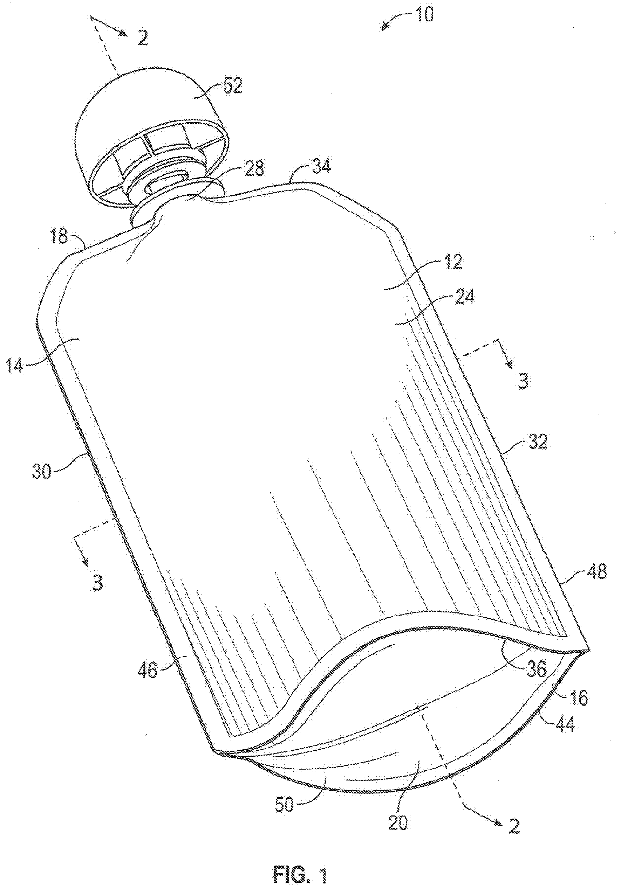

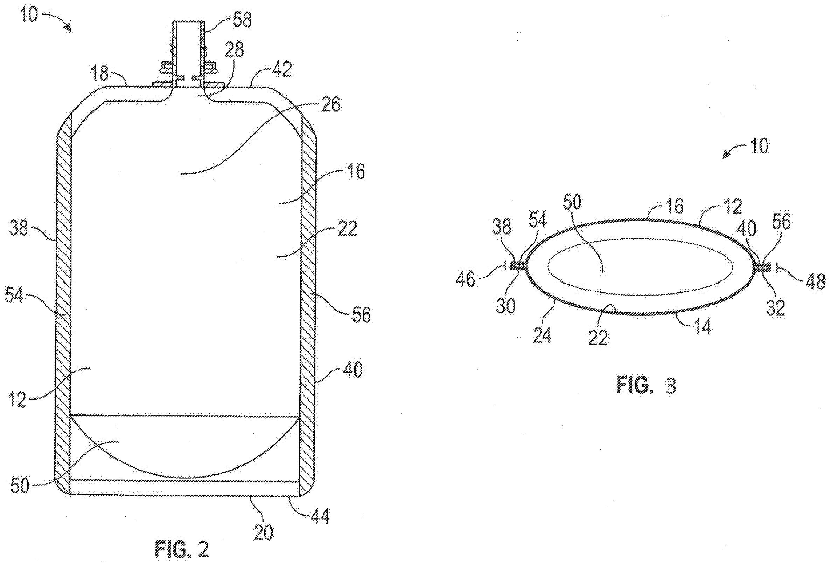

Shown in FIGS. 1-6 is an embodiment of a flexible pouch constructed in accordance with the presently disclosed inventive concept(s). The flexible pouch is indicated by the general reference numeral 10. The flexible pouch 10 includes a sidewall 12 that is formed from a front wall 14 (FIGS. 1 and 3) and a rear wall 16 (FIGS. 2 and 3). The flexible pouch 10 further includes an upper end 18 and a lower end 20, while the sidewall 12 has an inner surface 22 and an outer surface 24; in addition, the inner surface 22 of the sidewall 12 defines a receiving space 26 that may extend substantially between the upper end 18 and the lower end 20 of the flexible pouch 10. The upper end 18 has an opening 28 extending therethrough that provides access to the receiving space 26.

The front wall 14 has a first side edge 30, a second side edge 32, an upper edge 34, and a lower edge 36, while the rear wall 16 has a first side edge 38, a second side edge 40, an upper edge 42, and a lower edge 44. The first side edge 30 of the front wall 14 and the first side edge 38 of the rear wall 16 are connected to one another and peripherally sealed substantially along the lengths thereof to form a first vertical side fin seal 46 of the flexible pouch 10. Likewise, the second side edge 32 of the front wall 14 and the second side edge 40 of the rear wall 16 are connected to one another and peripherally sealed substantially along the lengths thereof to form a second vertical side fin seal 48 of the flexible pouch 10. FIG. 2 illustrates the flexible pouch 10 in a substantially flattened condition, while FIGS. 1 and 3-6 illustrate the flexible pouch 10 in a substantially open condition.

While the flexible pouch 10 is shown in FIGS. 1-6 as being formed from first and rear walls 14 and 16 and with first and second vertical side fin seals 46 and 48 formed therein, it will be understood that other methods of forming a flexible pouch that has seal(s) formed at different locations and/or has different type(s) of seal(s) formed therein are well known to a person of ordinary skill in the art. Therefore, it will be understood that the flexible pouches of the presently disclosed inventive concept(s) are not limited to the particular seal structures shown herein; rather, flexible pouches produced by different methods that result in different seal location(s) and/or type(s) of seal(s) also fall within the scope of the presently disclosed inventive concept(s), so long as the flexible pouches so produced are capable of functioning in accordance with the presently disclosed inventive concept(s) (i.e., are capable of being recycled and yet maintain a substantially upright, vertical position upon display and/or handling).

The lower end 20 of the flexible pouch 10 has a gusset 50 formed therein. The lower edges 36 and 44 of the front and rear walls 14 and 16, respectively, are connected to the gusset 50 in the lower end 20 of the flexible pouch, substantially along the widths thereof. Alternatively or in addition thereto, the front and rear walls 14 and 16 may be connected to the gusset 50 at one or more points above the lower edges 36 and 44, respectively, thereof. In an alternate embodiment, the lower edges 36 and 44 may be connected along their width to form a bottom seal to the flexible pouch 10 and thereby eliminate the need for the gusset 50. Additionally, whether the lower end 20 has a gusset or is simply sealed along its lower edges 36, 44, in an alternative embodiment the flexible pouch 10 may have a tear off portion adjacent to or associated with the lower end 20 such that at least a portion of the lower end 20 of the front wall 14 and the rear wall 16 are capable of being torn away to expose/open up the receiving space 26-thereby releasing or making accessible to a user the product disposed within the receiving space 26. While FIG. 3 illustrates the gusset 50 as being inwardly folded when the flexible pouch 10 is in a substantially flattened condition, it will be understood that the gusset 50 may be provided with any configuration that allows the lower end 20 to function in accordance with the presently disclosed inventive concept(s); that is, the gusset 50 may be provided in any configuration that allows the flexible pouch 10 to substantially remain in an upright position. Therefore, the inwardly folded gusset 50 of FIG. 3 should not be regarded as limiting.

In one particular, non-limiting example, the flexible pouch 10 is an upstanding flexible pouch that is capable of being disposed in an upright, vertical orientation and remaining so oriented by virtue of the structure of the flexible pouch 10 (and/or any product disposed thereon) when a gusseted lower end 20 of the flexible pouch 10 is in an expanded condition; however, in alternative embodiments, a flexible pouch may assume other configurations, as will be evident to a person of ordinary skill in the art, given the disclosure provided herein as well as knowledge available in the art. Thus, these alternative embodiments also fall within the scope of the presently disclosed inventive concept(s), so long as the flexible pouch is capable of functioning as described or otherwise contemplated herein, In another particular, non-limiting example, the flexible pouch is an upstanding, squeezable flexible pouch.

The flexible pouch 10 may be formed in any manner known in the art or otherwise contemplated by a person having ordinary skill in the art, so long as the flexible pouch 10 can function in accordance with the presently disclosed inventive concept(s). Methods of forming flexible pouches are well known in the art and are well within the knowledge of a person having ordinary skill in the art. Therefore, no further description on the production methods that may be employed is deemed necessary.

In a similar manner, any materials known in the art or otherwise contemplated by a person having ordinary skill in the art may be utilized in the construction of the flexible pouch 10, so long as the flexible pouch 10 is capable of functioning in accordance with the presently disclosed inventive concept(s). In addition, the front and rear walls 14 and 16 and the gusset 50 of the flexible pouch 10 may each be formed of the same or separate materials. Each of these materials may include a single layer of material or a plurality of the same or different layers of material (i.e., a laminated structure); when multiple layers are present, they may be laminated or co-extruded or otherwise combined. For example, but not by way of limitation, at least a portion of the inner surface 22 of the sidewall 12 may be formed of a first material, while at least a portion of the outer surface 24 of the sidewall 12 may be formed of a second material (which may be the same or different from the first material); in addition, at least a portion of the gusset 50 in the lower end 20 of the flexible pouch 10 may be formed of a third material, wherein the third material may be the same or different from the first and/or second materials. Examples of materials that may be utilized in accordance with the presently disclosed inventive concept(s) include, but are not limited to, nylon; foil (including, but not limited to, an aluminum foil); a polyester (including, but not limited to, an oriented polyester, such as oriented or biaxially oriented polyethylene terephthalate (PET)); a polyolefin, such as but not limited to, polypropylene (PP) or polyethylene (PE) (including, but not limited to, low density polyethylene (LDPE) and linear low density polyethylene (LLDPE)); ethyl vinyl alcohol (EVOH) and EVOH copolymers; combinations, laminates, and/or extrusions of any of the above; and the like. However, other materials that may be used in the construction of flexible pouches are well known in the art and can easily be contemplated by a person having ordinary skill in the art, and therefore these materials also fall within the scope of the presently disclosed inventive concept(s).

In particular non-limiting examples, the flexible pouch 10 may be formed of a polymeric material, such as but not limited to, a polymeric material that is Bisphenol A (BPA)-free and/or a polymeric material that is recyclable and/or renewable. In addition, the material(s) from which the flexible pouch 10 is constructed may be gas permeable and/or gas impervious, depending on the product(s) to be packaged in the flexible pouch 10. Further, the materials from which the flexible pouch 10 is constructed may also have one or more coatings/lacquers applied thereto, based on the type of product(s) to be packaged in the flexible pouch 10. For example, but not by way of limitation, the materials may be provided with a liquid-resistant/liquidproof coating, a gas impervious coating, an insulated coating, and/or other type of coating that increases the shelf-life of the product packaged within the flexible pouch 10.

In one particular embodiment, as shown in FIGS. 1-6, the upper edge 34 of the front wall 14 and the upper edge 42 of the rear wall 16 are connected to one another along a portion of the widths thereof to form the upper end 18 of the flexible pouch 10. A portion of the upper edges 34 and 42 are left unconnected to one another so as to form the opening 28 in the upper end 18 of the flexible pouch 10 through which contents disposed therein can be dispensed. In addition, the flexible pouch 10 may further include a cap 52 (or other type of closure/sealing and/or opening device) that is releasably attached to the opening 28 in the upper end 18 of the flexible pouch 10. However, the illustration of the cap 52 is for purposes of illustration only and should not be considered limiting to the presently disclosed inventive concept(s). For example, but not by way of limitation, the flexible pouch 10 may be provided with another type of closure device, such as but not limited to, a press-to-close/zipper-type or slider device, that allows for control of the release of substances through the opening 28 in the upper end 18 of the flexible pouch 10 and/or allows for closure/resealing of the opening 28 in the upper end 18 of the flexible pouch 10. In yet another alternative (and/or in addition to a cap and/or any type of closure devices), a dispensing device 58 (such as, but not limited to, a straw, spout, valve, fitment, combinations thereof, and the like) may be attached to the opening 28 to provide a level of control to the release of substances from the flexible pouch 10 and/or to provide a sealing or locking mechanism to the flexible pouch 10 when used in combination with the cap 52. In an alternative embodiment, the dispensing device 58 may comprise a tear off portion adjacent to or associated with the opening 28 such that at least a portion of the dispensing device 58 is capable of being torn away from the upper end 18 of the flexible pouch 10 to expose/open up the receiving space 26-thereby releasing or making accessible to a user the product disposed within the receiving space 26. In this embodiment, the dispensing device 58 may be formed from at least a portion of the front wall 14 and the rear wall 16 that extends away from the upper edges 34, 42 of the front wall 14 and rear wall 16, respectively, to form a spout that can be sealed along its outer peripheral edge or across its entirety. As such, a user would tear the material in a path across the dispensing device 58 in a direction generally parallel to the upper edge 18 and thereby make the product dispensed within the receiving space 26 accessible via the opening 28.

While the front and rear walls 14 and 16 are described herein above as being connected to one another along a portion of the upper edges 34 and 42, respectively, thereof, and an opening formed through a point of non-connection between the two upper edges 34 and 42, it will be understood that, in an alternative embodiment, the front and rear walls 14 and 16 may be connected to one another at a point below the upper edges 34 and 42, respectively, thereof in the formation of the upper end 18 of the flexible pouch 10. Alternatively, another structure may be attached in between the front and rear walls 14 and 16 and in an area adjacent to or in relative proximity to the upper edges 34 and 42, respectively, thereof, wherein the structure may form the upper end 18 of the flexible pouch 10 (either alone or in combination with the upper edges 34 and 42 of the front and rear walls 14 and 16, respectively). This additional structure may be similar to the gusset 50 in the lower end 20 of the flexible pouch 10, and may assist in the attachment of one or more closure, opening, resealing, and/or dispensing devices to the flexible pouch 10.

In addition, while the opening 28 is described as being formed in the upper end 18, it will be understood that an alternative placement of the opening 28 (such, as but not limited to, within the front wall 14, the rear wall 16, the lower end 20, the first vertical side fin seal 46, the second vertical side fin seal 48, and/or the gusset 50) may be desired. Therefore, placement of the opening 28 in one of these alternative locations also falls within the scope of the presently disclosed inventive concept(s), so long as such placement does not affect the function of the flexible pouch 10 of the presently disclosed inventive concept(s) (for example, but not limited to, the ability of the flexible pouch 10 and its constituent materials to be placed more easily within appropriate and/or desired recycling streams).

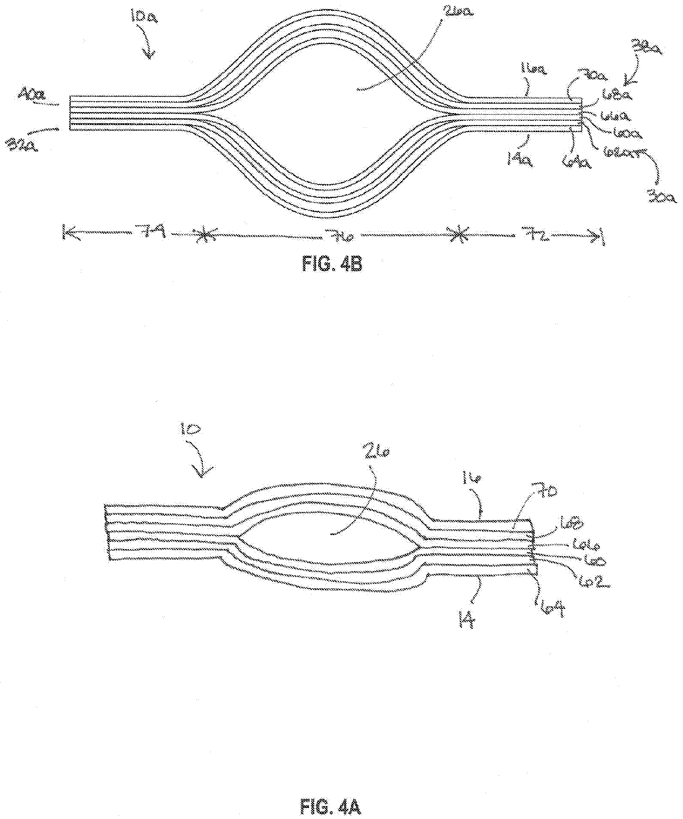

Referring now to FIGS. 4-6, it is contemplated that the front wall 14 and the rear wall 16 are constructed of a plurality of sheets of material that can be separated from one another and thereafter recycled. Although shown in FIGS. 4-6 as comprising three sheets (or layers) of materials, one of ordinary skill in the art will appreciate that this number of layers is simply for purpose of illustration and should not be considered as limiting. Additionally, while front and rear walls 14, 16 are shown in FIGS. 4-6 as having three layers each, it is contemplated that the number of layers of material comprising front and rear walls 14, 16 are not required to be identical-e.g., front wall 14 may comprise three layers while rear wall 16 comprises two layers. As such, one of skill in the art will appreciate that the front wall 14 and the rear wall 16 may comprise the same or differing number of sheets or layers of materials depending upon desired characteristics.

As shown in FIG. 4A, the front wall 14 and the rear wall 16 are formed of a plurality of flexible layers of materials. In one embodiment, the front wall 14 and the rear wall 16 are each formed of three flexible layers of materials (for a total of six layers of flexible materials): an inner layer 60, an intermediate layer 62, and an outer layer 64 of the front wall 14; and an inner layer 66, an intermediate layer 68, and an outer layer 70 of the rear wall 16. It is contemplated that each of the plurality of flexible layers may be of identical or differing materials and/or thicknesses and/or shapes. For example, inner layers 60, 66 may comprise the same or differing materials. Similarly, intermediate layers 62, 68, as well as outer layers 64, 70, may comprise the same or differing materials. In one embodiment, it is contemplated that inner layers 60, 66 are identical, intermediate layers 62, 68 are identical, and outer layers 64, 70 are identical. In this manner, and as shown in FIG. 4A, each of the front wall 14 and the rear wall 16 are comprised of at least three layers of flexible materials that may be of identical or differing composition and/or have different characteristics. Examples of materials that may comprise the front wall 14 and/or the rear wall 16, but not to be construed as limiting, are given in Table I.

**TABLE I**

| Layers of Material | Potential Reasons for Inclusion |
|---|---|
| PE/Alu/ink/PET-with or without a PE cap and dispensing device | PE for sealing/pouch forming; Alu for protection, stiffness, and gas/moisture barrier; PET for aluminum and print protection. |
| PP/Alu/ink/PET-with or without a PP cap and dispensing device | PP for sealing/pouch forming; Alu for protection, protection, stiffness, and gas/moisture barrier; PET for aluminum and ink protection. |
| PE/Ink/AlOx(or SiOx) Coated PET | PE for sealing/pouch forming; AlOx or SiOx coated PET for gas/moisture barrier and ink protection. |

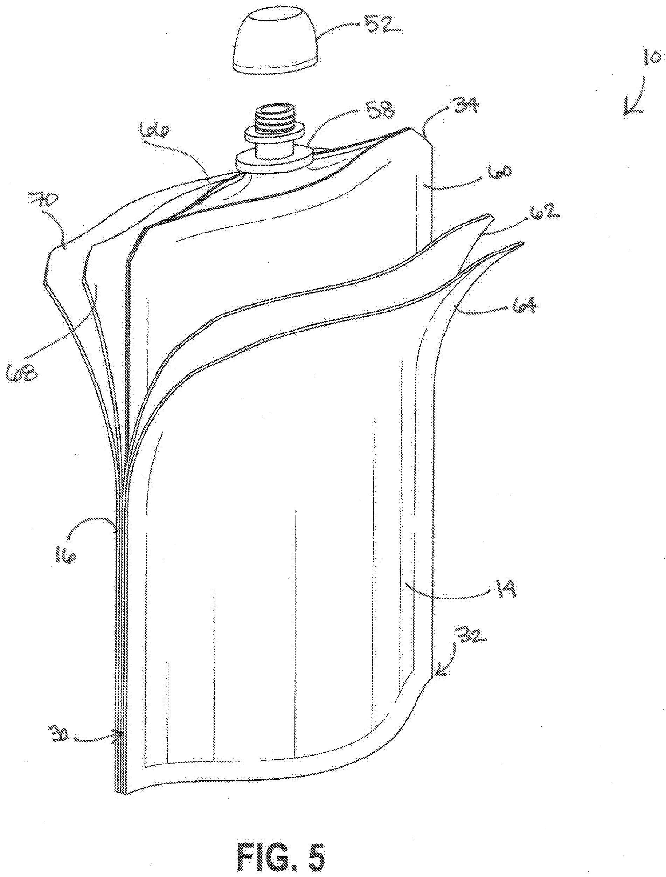

The plurality of flexible layers of materials forming the front wall 14 and the rear wall 16 are attached, associated with, or connected to one another. In one embodiment shown best in FIG. 4A, the plurality of flexible layers of materials are connected substantially across their entirety to one another via a bonding material, for example but not by way of limitation, to thereby form the front wall 14 and the rear wall 16. The connection between the inner layer 60 and the intermediate layer 62 has a first union strength that can be overcome when intermediate layer 62 is pulled away from inner layer 60. In such a manner, intermediate layer 62 can be removed from inner layer 60 when sufficient force is applied to overcome the first union strength. Similarly, the connection between the intermediate layer 62 and the outer layer 64 has a second union strength that can be overcome when the outer layer 64 is pulled away from the intermediate layer 62. In such a manner, outer layer 64 can be removed from the intermediate layer 62 when sufficient force is applied to overcome the second union strength. As shown in FIGS. 5-6, the front wall 14 can be deconstructed such that its constituent parts (i.e., inner layer 60, intermediate layer 62, and outer layer 64 when fully deconstructed) can be placed into appropriate recycling streams.

The term "bonding material" as used herein will be understood to refer to any material that is sufficient to connect two elements to one another; in particular, the term "bonding material" will be understood to refer to any material that is sufficient to connect at least one of the outer, intermediate, and inner layers of the front and rear walls to one another as disclosed or otherwise contemplated herein. Examples of bonding materials include, but are not limited to, adhesives (including, but not limited to, pressure-sensitive adhesives and cold seal adhesives), cohesives, adhesive/cohesive combinations, heat sealable materials (such as, but not limited to, heat sealing lacquers or hot melt materials), sonically sealable materials (including, but not limited to, ultrasonically sealable materials), vibratory sealable materials, combinations thereof, and the like. Furthermore, the term "bonding material" shall comprise any bonding that may occur (or any other physical connection existing between) between disparate types of materials (such as plastics) that may be coextruded.

In a similar manner, the connection between the inner layer 66 and the intermediate layer 68 has a third union strength and the connection between the intermediate layer 68 and the outer layer 70 has a fourth union strength. Upon sufficient force being applied, the third and fourth union strengths can be overcome so as to remove the outer layer 70 from the intermediate layer 68, and the intermediate layer 68 from the inner layer 66.

Although inner layers 60, 66 are shown in FIGS. 5-6 as remaining connected to one another after the intermediate layers 62, 68 and outer layers 64, 70 have been removed, it is contemplated that inner layers 60, 66 may also be formed in a manner such that the inner layer 60 is separate, in whole or in part, from the inner layer 66 and each, thereafter, may be placed individually into one or more recycling streams. If it is desirable to separate inner layer 60 away from inner layer 66, the connection of inner layers 60, 66 (along the first and second vertical side fin seals 46, 48, for example but not by way of limitation) has a fifth union strength that can be overcome when the inner layer 60 is pulled away from inner layer 66. In such a manner, the inner layer 60 can be removed from the inner layer 66 when sufficient force is applied to overcome the fifth union strength,

Although the preceding paragraphs have used the terms first, second, third, fourth, and fifth union strengths, it should be appreciated that any number of differing union strengths are contemplated for use to attach the plurality of layers of sheets of material to one another to form the front wall 14 and the rear wall 16. Furthermore, the attachment of any two successive layers may have more than one union strength associated therewith. For example, but not by way of limitation, the attachment of outer layer 64 to intermediate layer 62 may be of a consistent union strength across the entirety of the attachment interface of outer layer 64 and intermediate layer 62. Alternatively, there may exist a gradient or varying levels or amounts of union strength existing across the entirety of the attachment interface of outer layer 64 and intermediate layer 62 such that differing levels of force may be required to remove discrete portions of outer layer 64 from intermediate layer 62. Given the foregoing, one of ordinary skill in the art will appreciate that the choice of bonding material (or other means of releasably attaching the layers to one another) will determine the level of union strength existing between the layers of materials and such union strengths can be tailored to the specific need or desirability for use with the recyclable flexible pouch 10.

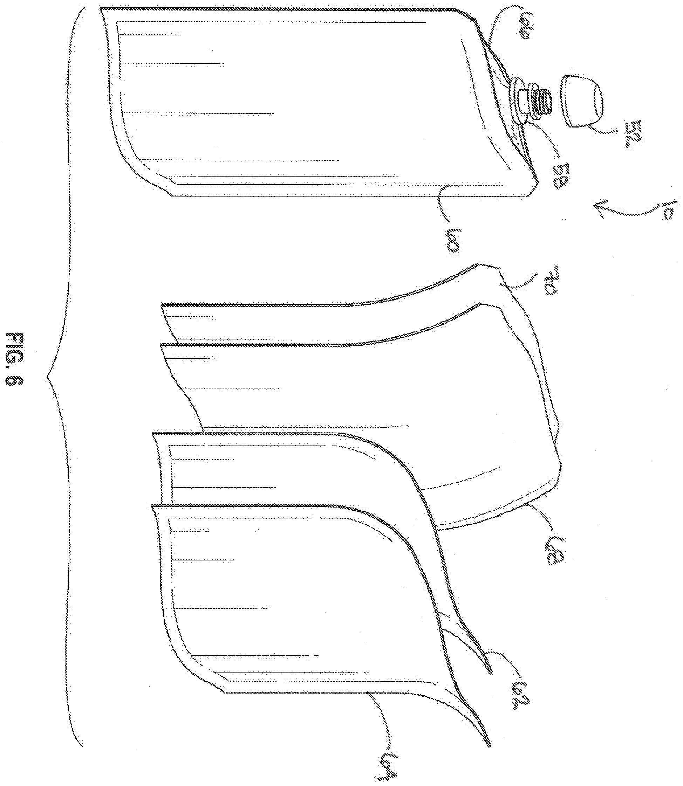

In this manner, and as shown best in FIGs. 5-6, each of the intermediate layers 62, 68 and the outer layers 64, 70 can be removed from one another and from the inner layers 60, 66. As such, the rear wall 16 can be deconstructed such that its constituent parts (i.e., inner layer 66, intermediate layer 68, and outer layer 70) can also be placed into appropriate recycling streams. For example, but not by way of limitation, upon removal the outer layers 64, 70 can be placed into a first recycling stream while the intermediate layers 62, 68 can be placed in the first recycling stream or a second recycling stream. As shown in FIG. 6, it is contemplated that the inner layers 60, 66 remain connected to one another along at least a portion of their outer edges (for example, along at least a portion of the first, second, upper and lower edges 30, 32, 34, 36 of the inner layer 60 and along at least a portion of the first, second, upper and lower edges 38, 40, 42, 44 of inner layer 66) such that the remaining pouch comprising inner layers 60, 66 can be placed into the first or second recycling stream or in a third recycling stream.

It is also contemplated that cap 52 may be placed into the first, second or third recycling streams or in a fourth recycling stream. Likewise, the dispensing device 58 (shown as a fitment in FIGS. 1-6, for example but not by way of limitation) may be recycled with the remaining pouch formed of only the inner layers 60, 66 (as shown in FIG. 6) for recycling. The dispensing device 58 may, in an alternate embodiment, be separated from the remaining pouch formed of only the inner layers 60, 66 (FIG. 6) for recycling. In another embodiment, the inner layers 60, 66 may be detached from one another and from the dispensing device 58 and all three components can be collectively or separately recycled.

In another embodiment of the flexible pouch designated as 10a and shown in FIG. 4B, the plurality of flexible layers of materials forming the front wall 14a and the rear wall 16a are partially connected to one another. The inner layers 60a, 66a, the intermediate layers 62a, 68a, and the outer layers 64a, 70a are connected to one another along: (i) a first connection area 72 adjacent the first side edge 30a of the front wall 14a and the first side edge 38a of the rear wall 16a, and (ii) a second connection area 74 adjacent the second side edge 32a of the front wall 14a and the second side edge 40a of the rear wall 16a. In this manner, an unconnected area 76 exists between the inner, intermediate, and outer layers 60a, 62a, 64a of the front wall 14a and between the inner, intermediate, and outer layers 66a, 68a, and 70a of the rear wall 16a. The area defined by the space existing between the inner layer 60a of the front wall 14a and the inner layer 66a of the rear wall 16a is the receiving space 26 of the flexible pouch 10a.

Although exaggerated in the illustration of FIG. 4B for purposes of explanation, the layers of material in the unconnected area 76 are generally untethered or otherwise mechanically associated and may freely move with respect to one another. The unconnected area 76 generally extends between the upper end 18 and the lower end 20. In an alternate embodiment, areas of bonding material or other means of releasably connecting the inner layers 60a, 66a to the intermediate layers 62a, 68a and/or the intermediate layers 62a, 68a to the outer layers 64a, 70a may be present in discrete areas within the unconnected area 16. As such, the layers of material of the front wall 14a and the rear wall 16a in the unconnected area 76 may not be completely untethered or otherwise mechanically associated from one another. In this manner the ability of the layers of material to move freely within the unconnected area 76 may be at least partially constrained and thereby provide a means of internal support to the flexible pouch 10a. Such areas of discrete bonding material placed within the unconnected area 76 may be of any size or geometric shape and may comprise the same bonding material or differing bonding materials providing identical, nearly identical, substantially identical, or non-identical union strengths to the attachment of the layers of materials to one another.

The plurality of layers making up the front wall 14a and the rear wall 16a, when connected only along the first connection area 72 and the second connection area 74, may also be connected along the upper end 18a and the lower end 20a of the flexible pouch body 10a such that there exists an area of connection extending substantially around an outer peripheral edge of the sidewall 12a of the flexible pouch 10a. In such an embodiment, the lower end 20a may include a gusset 50a and/or the upper end 18a may also include a gusset similar to gusset 50a. Alternatively, the lower end 20a and the upper end 18a may be sealed, in whole or in part, between the front wall 14a and the rear wall 16a.

Given the foregoing description, a recyclable flexible pouch is provided wherein the constituent parts of the pouch are readily deconstructed or disassembled such that each of the constituent parts may be collectively or separately recycled in an efficient and expeditious fashion as illustrated in FIGS. 5-6. In FIG. 5, a user has begun the process of removing the constituent parts of the flexible pouch 10. The first union strength between the inner layer 60 and the intermediate layer 62 of the front wall 14 has been overcome in an area adjacent the upper end 18 of the flexible pouch 10 such that the intermediate layer 62 has begun to be peeled away from the inner layer 60. Similarly, the second union strength between the intermediate layer 62 and the outer layer 64 of the front wall 14 has been overcome in an area adjacent the upper end 18 of the flexible pouch 10 such that the outer layer 64 has begun to be peeled away from the intermediate layer 62. The third union strength between the inner layer 66 and the intermediate layer 68 of the rear wall 16 has been overcome in an area adjacent the upper end 18 of the flexible pouch 10 such that the intermediate layer 68 has begun to be peeled away from the inner layer 66. Finally, the fourth union strength between the intermediate layer 68 and the outer layer 70 of the rear wall 16 has been overcome in an area adjacent the upper end 18 of the flexible pouch 10 such that the outer layer 70 has begun to be peeled away from the intermediate layer 68. The cap 52 has also been removed from the dispensing device 58. As shown in FIG. 6, after the user has completely overcome the first, second, third, and fourth union strengths the flexible pouch 10 has been deconstructed into its constituent parts such that outer layers 64, 70 and intermediate layers 62, 68 have been completely removed from the flexible pouch 10. The outer layers 64, 70, the intermediate layers 62, 68, and the remaining pouch formed from the inner layers 60, 66 can thereafter be placed into one or more recycling streams. In an alternate embodiment, the remaining pouch formed from the inner layers 60, 66 can be further deconstructed by a user and recycled by overcoming the fifth union strength joining the inner layers 60, 66 together. It should be noted that first, second, third, fourth, and/or fifth union strengths may be identical, in whole or in part, to one another and/or differ from one area to another area within the flexible pouch 10. It is contemplated that to ease removal of the outer layer 64 and the intermediate layer 62 of the front wall 14 that the union strength between the outer layer 64 and the intermediate layer 62 is less than the union strength between the intermediate layer 62 and the inner layer 60, for example but not by way of limitation. In one embodiment, all the union strengths are the same while in an alternative embodiment all of the union strengths are different. One of ordinary skill in the art will appreciate that the union strength existing between any two materials of the flexible pouch 10 can be tailored so as to match any particular characteristics or delamination process desired.

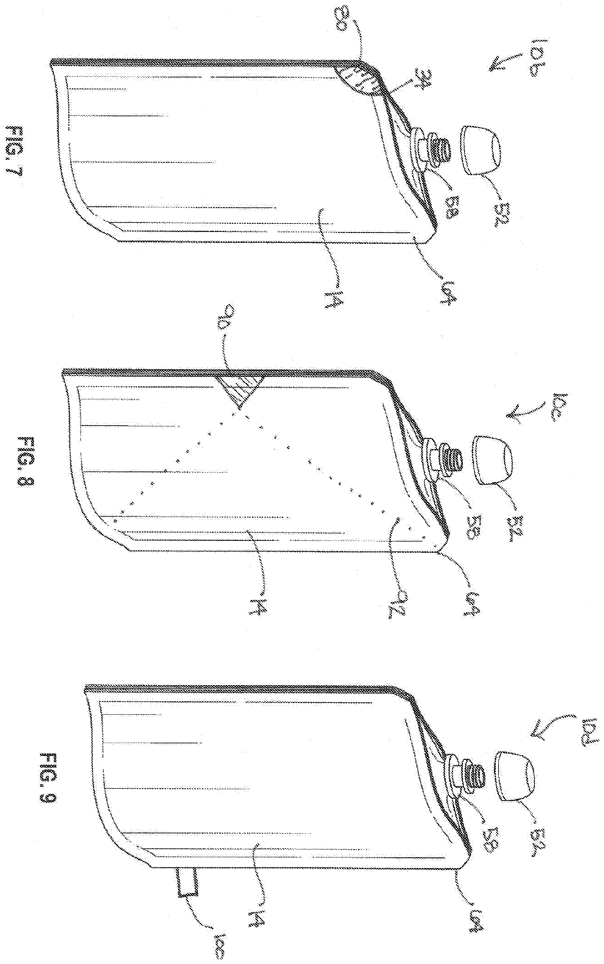

Alternative embodiments of the recyclable flexible pouch 10 are shown in FIGS. 7-12 as having tabs, score lines, cuts and other means for assisting in the removal of one or more of the outer layers 64, 70, intermediate layers 62, 68, and inner layers 60, 66 of the front wall 14 and the rear wall 16, respectively. For the purpose and ease of illustration (as shown in FIGS. 7-12) these means for assisting in the removal of one or more of the layers making up the front and rear walls 14, 16 of the flexible pouch 10 are shown as being present only on the outer layer 64 of the front wall 14. Additionally, the means for assisting in the removal of one or more of these layers are shown in particular locations along an outer peripheral edge of the sidewall 12, at the upper edge 34 of the front wall 14, at the second side edge 32 of the front wall 14, and at various locations on the outer surface 24 of the front wall 14. The specific location of the means for assisting in the removal of one or more of the layers forming the front and rear walls 14, 16, respectively, should not be regarded as limited to those locations or the specific layers of materials shown in FIGS. 7-12. One of ordinary skill in the art, given the present disclosure, would appreciate that the number, location, and/or placement of the means for assisting in the removal of these layers is tailorable for the desired ability to remove and/or delaminate and/or deconstruct any constituent part of the flexible pouch 10 to make the constituent parts more easily recyclable.

As shown in FIG. 7, a flexible pouch 10b is provided with a means for assisting in the removal of at least the outer layer 64 of the front wall 14. In particular, the means for assisting in the removal of the outer layer 64 shown in FIG. 7 comprises at least one unconnected fin portion 80 located adjacent at least a portion of the upper edge 34 of the front wall 14. The unconnected fin portion 80 is a portion of the outer layer of material 64 of the front wall 14 that is unconnected or unattached to the intermediate layer 62. In operation, a user places the tip of a finger or a fingernail under the unconnected fin portion and thereby between the outer layer 64 and the intermediate layer 62 of the front wall 14 to bias the unconnected fin portion 80 away from the intermediate layer 62. The user then grasps the unconnected fin portion 80 between their thumb and first finger and exerts a force on the unconnected fin portion 80 (and the remainder of the outer layer 64 associated with the unconnected fin portion 80) thereby overcoming the second union strength and pulling the outer layer 64 away from the intermediate layer 62. Similar unconnected fin portions 80 may also be attached to the intermediate layers 62, 68, inner layers 60, 66, and the outer layer 70 in order to assist or facilitate in the removal of the layers of material for recycling.

As shown in FIG. 8, a flexible pouch 10c is provided with a means for assisting in the removal of at least the outer layer 64 of the front wall 14. In particular, the means for assisting in the removal of the outer layer 64 shown in FIG. 8 comprises at least one cut 90 and a tear-line 92 extending across the outer surface 24 of the outer layer 64 of the front wall 14. The cut 90 may extend through only the outer layer 64 of the front wall 14 or it may extend through the outer layer 64 and the intermediate layer 62 or extend through the outer layer 64, the intermediate layer 62, and the inner layer 60. It is contemplated that the attachment of the outer layer 64 with the intermediate layer 62, in the area immediately adjacent the cut 90, may be incomplete—i.e., at least a portion of the area immediately adjacent the cut 90 is unattached between the outer layer 64 and the intermediate layer 62. The tear-line 92 comprises a score or other type of perforation in the outer layer 64 and facilitates the removal of the outer layer 64 from the intermediate layer 62. In operation, a user places the tip of a finger or a fingernail within the incomplete attachment area adjacent the cut 90 and thereby between the outer layer 64 and the intermediate layer 62 of the front wall 14. The user then biases the outer layer 64 away from the intermediate layer 62, exerting enough force to overcome the second union strength, and pulls the outer layer 64 away from the intermediate layer 62. The outer layer 64 tears along the tear-line 92 thereby removing portions of the outer layer 64 from the intermediate layer 62. While shown in a zig-zag pattern in FIG. 8, tear-line 92 may be of any shape or configuration. Similar cuts 90 and tear-lines 92 may also be placed to the intermediate layers 62, 68, inner layers 60, 66, and the outer layer 70 in order to assist or facilitate in the removal of the layers of material for recycling.

As shown in FIG. 9, a flexible pouch 10d is provided with a means for assisting in the removal of at least the outer layer 64 of the front wall 14. In particular, the means for assisting in the removal of the outer layer 64 shown in FIG. 9 comprises at least one removal tab 100 located adjacent at least a portion of the second side edge 32 of the front wall 14. In the embodiment of FIG. 9, the removal tab 100 is an extension of the outer layer 64 of the front wall 14 and extends away from the second side edge 32 thereof. In operation, a user grasps the removal tab 100 and pulls the removal tab 100 and the attached outer layer 64 away from the intermediate layer 62. In so doing, the user exerts a force on the removal tab 100 and the outer layer 64 associated therewith which is sufficient to overcome the second union strength existing between the outer layer 64 and the intermediate layer 62 thereby removing the outer layer 64 from the flexible pouch 10d. Similar removal tabs 100 may also be attached to the intermediate layers 62, 68, inner layers 60, 66, and the outer layer 70 in order to assist or facilitate in the removal of the layers of material for recycling.

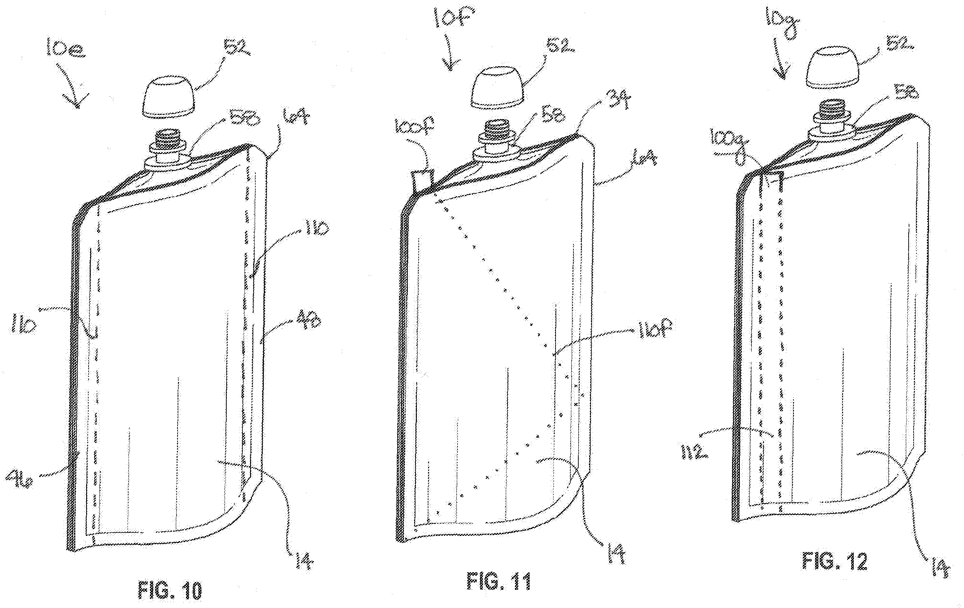

As shown in FIG. 10, a flexible pouch 10e is provided with a means for assisting in the removal of at least the outer layer 63 of the front wall 14. In particular, the means for assisting in the removal of the outer layer 64 shown in FIG. 10 comprises at least one score line 110 (with two such score lines 110 shown in FIG. 10) extending across the outer layer 64 of the front wall 14. The score line 110 comprises perforations or other means for nicking the outer layer of material 64 to thereby provide the ability for a user to tear the material. In operation, a user would grasp the flexible pouch 10e in their hands and tear the material along the score lines 110. As shown in FIG. 10, for example but not by way of limitation, the score lines 110 are placed immediately adjacent the first and second vertical side fin seals 46, 48 and extend through outer layers 64, 70, the intermediate layers 62, 68, and the inner layers 60, 66 substantially as indicated on the outer layer 64 of the front wall 14. When the user tears the material along the score lines 110, the first and second vertical side fin seals 46, 48 are removed and the outer layers of material 64, 70 can be peeled away from the intermediate layers of material 62, 68 which can, in turn, be peeled away from the inner layers of material 60, 66. If the layers of material are configured according to the embodiment of FIG. 4B, once the first and second vertical side fin seals 46, 48 are removed via tearing along the score lines 110, the remaining layers of material comprising the unconnected area 76 is easily removed from the remaining pouch comprising the connected inner layers 60, 66. While shown in a straight line in FIG. 10, score lines 110 may be of any shape or configuration. Similar score lines 110 may also be placed in the intermediate layers 62, 68, inner layers 60, 66, and the outer layer 70 in order to assist or facilitate in the removal of the layers of material for recycling.

As shown in FIG. 11, a flexible pouch 10f is provided with a means for assisting in the removal of at least the outer layer 64 of the front wall 14. In particular, the means for assisting in the removal of the outer layer 64 shown in FIG. 11 comprises at least one removal tab 100f located adjacent at least a portion of the upper edge 34 of the front wall 14 associated with at least one score line 110f in the outer layer 64. In the embodiment of FIG. 11, the removal tab 100f is an extension of the outer layer 64 of the front wall 14 and extends away from the upper edge 34 thereof. In operation, a user grasps the removal tab 100f and pulls the removal tab 100f and the outer layer 64 attached thereto away from the intermediate layer 62. In so doing, the user exerts a force on the removal tab 100f and the outer layer 64 sufficient to overcome the second union strength existing between the outer layer 64 and the intermediate layer 62 thereby removing the outer layer 64 from the flexible pouch 10f. The score lines 110f associated with the removal tab 100f facilitate the removal of one or more portions of the outer layer 64 from the intermediate layer 62. Similar removal tabs 100f may also be attached to the intermediate layers 62, 68, inner layers 60, 66, and the outer layer 70 in order to assist or facilitate in the removal of the layers of material for recycling.

As shown in FIG. 12, a flexible pouch 10g is provided with a means for assisting in the removal of at least the outer layer 64 of the front wall 14. In particular, the means for assisting in the removal of the outer layer 64 shown in FIG. 12 comprises at least one removal tab 100g located adjacent at least a portion of the upper edge 34 of the front wall 14 associated with at least one tear-away strip 112 in the outer layer 64. In the embodiment of FIG. 12, the removal tab 100g is an unconnected portion of the outer layer 64 of the front wall 14 adjacent the upper edge 34 thereof. In operation, a user grasps the removal tab 100g and pulls the removal tab 100g thereby removing the tear-away strip 112. Thereafter, the user pulls the attached outer layer 64 away from the intermediate layer 62. In so doing, the user exerts a force on the outer layer 64 sufficient to overcome the second union strength existing between the outer layer 64 and the intermediate layer 62 thereby removing the outer layer 64 from the flexible pouch 10f. The tear-away strip 112 associated with the removal tab 100g facilitates the removal of one or more portions of the outer layer 64 from the intermediate layer 62. Similar removal tabs 100g and/or tear-away strips may also be attached to the intermediate layers 62, 68, inner layers 60, 66, and the outer layer 70 in order to assist or facilitate in the removal of the layers of material for recycling.

The flexible pouch 10 may further include one or more colors, designs, and/or patterns disposed on at least a portion thereof. The color(s), design(s), and/or pattern(s) may include, for example but not by way of limitation, packaging and/or labeling information (including, but not limited to, "use by" dates and/or batch codes), instructions for use, promotional material, company information, logos/trademarks, combinations thereof, and the like. The color(s), design(s) and/or pattern(s) may be disposed on the flexible pouch 10 (and/or the material from which the flexible pouch 10 is formed) by any method known in the art, including but not limited to, printing, etching, embossing, texturing, coating, lacquering, application during extrusion, and the like. The color(s), design(s) and/or pattern(s) may be applied separately or simultaneously and/or may be characterized totally or partially by pearlescent, translucent, transparent, iridescent, or other similar qualities. Each of the above-named characteristics may occur alone or in combination and may be applied to a portion of the flexible pouch 10 and/or the material from which the flexible pouch 10 is formed. Moreover, when the flexible pouch 10 comprises two or more layers of material, each of the layers of material may vary in the combination of such characteristics.

The method may further include the step of disposing a predetermined quantity of a product within the flexible pouch and releasably sealing the product therewithin. Any type of product(s) may be disposed within the flexible pouch, so long as the pouch is capable of functioning as disclosed and/or otherwise contemplated herein. The product(s) may be shelf-stable, or the product(s) may be perishable and thus require refrigerated and/or frozen storage conditions. In addition, the product may be in a solid, semi-solid, semi-liquid, liquid, and/or gaseous form. For example, but not by way of limitation, the product may be selected from the group consisting of baby food, juice, fruit and/or vegetable purees, beverages (milk, coffee, flavored drinks, etc.), beverage concentrate and/or drink mix, other liquid products (i.e., oils, salad dressings, sauces, marinades, vinegar, etc.), condiments (i.e., ketchup, mustard, relish, honey, butter, etc.), granulated products (spices, seeds, grains, etc.), processed meat and/or poultry, pet food, pet treats, pet supplies, refrigerated/frozen foods, dairy products, candy and confectionary items, baking supplies, puddings, creams, vegetables, fruit, vegetable and/or fruit-based products (i.e., applesauce), health food products, baked goods, dried fruits and/or nuts, snack foods, breakfast foods (cereal, oatmeal, granola, etc.), cleaning and other household supplies, health and beauty products (i.e., cosmetics, creams, lotions, shampoo/conditioner, soaps and washes, oils, mouthwashes, etc.), pharmaceutical products, and combinations thereof.

The method may further include one or more of the following steps: releasably attaching a cap to the opening in the upper end of the flexible pouch; attaching a device that allows the opening in the upper end of the flexible pouch to be resealed; and/or attaching at least one dispensing device to the opening in the upper end of the flexible pouch.

Certain embodiments of the presently disclosed inventive concept(s) are directed to a packaged product that includes any of the flexible pouches described or otherwise contemplated herein, along with a product disposed within the receiving space of the flexible pouch. In particular embodiments, a predetermined quantity of a product may be disposed within the receiving space and sealed within the flexible pouch.

Another embodiment of the presently disclosed inventive concept(s) is directed to a method of producing a packaged product as described herein above. In the method, a premeasured quantity of a product is disposed within the receiving space of any of the flexible pouches described or otherwise contemplated herein and sealed therewithin.

Another embodiment of the presently disclosed inventive concept(s) is directed to a kit containing at least one of the packaged products described herein above (i.e., a flexible pouch containing at least one product disposed therein). A kit may include one or more packaged products, such as but not limited to, two or more packaged products, three or more packaged products, four or more packaged products, five or more packaged products, six or more packaged products, seven or more packaged products, eight or more packaged products, nine or more packaged products, ten or more packaged products, eleven or more packaged products, twelve or more packaged products, thirteen or more packaged products, fourteen or more packaged products, fifteen or more packaged products, sixteen or more packaged products, seventeen or more packaged products, eighteen or more packaged products, nineteen or more packaged products, twenty or more packaged products, and the like. Each flexible pouch present in the kit may be the same, or the kit may contain two or more different types/sizes of flexible pouches. In addition, each product packaged in the flexible pouches may be the same, or the kit may contain two or more different products.

The kits of the presently disclosed inventive concept(s) may further include a display unit on which at least a portion of the packaged produce(s)/kit(s) may be disposed and thereby displayed. Display units are well known in the art, and therefore no further discussion thereof is deemed necessary.

The kits of the presently disclosed inventive concept(s) may further include one or more sets of instructions. The instructions may explain how to use the kit(s) for display of the packaged product(s) present therein and/or how to produce a display assembly that includes one or more packaged product(s) of the kit(s) disposed on a display unit. Any type of format capable of conveying the desired information (and/or directing a user's attention to a location where said information can be found) may be utilized as the instructions described or otherwise contemplated herein. Non-limiting examples of formats in which the instructions may be provided include written wording and/or pictorial drawings, hardware, software, a website address, a bar code (such as but not limited to, a QR code) that is readable by an imaging device/code reader, combinations thereof, and the like. The instructions may contain static information, or the instructions may be in an interactive form.

Another embodiment of the presently disclosed inventive concept(s) is directed to an assembly. The assembly includes one or more of any of the packaged products disclosed or otherwise contemplated herein (and/or one or more of the kits containing same) and a display unit on which at least a portion of the packaged product(s)/kit(s) is disposed and thereby displayed.

In particular embodiments of the kits and assemblies of the presently disclosed inventive concept(s), the plurality of packaged product(s) are further defined as a range of food and/or beverage products, each being disposed in a flexible pouch constructed in accordance with the presently disclosed inventive concept(s). The range includes a plurality of different products disposed in flexible pouches that are produced as described herein above. The range may include a plurality of individual products and/or a plurality of kits containing the individual products. The plurality of products may differ in the types of food disposed therein. Alternatively and/or in addition thereto, the plurality of products may differ in the age range/stage to which they are directed. For example, but not by way of limitation, US Published Application No. US2010/0255114, discloses a range of shelf-stable baby food products for meeting the nutritional needs of an infant/child at a specific stage of infant development; these stages include Stage 1 (from about 4 months to about 6 months), Stage 2 (from about 6 months to about 8 months), Stage 3 (from about 8 months to about 12 months), and Stage 4 (from about 12 months to about 36 months). Thus, the plurality of products in the range may include a combination of foods directed to two or more of Stages 1-4 listed above.

Yet another further embodiment of the presently disclosed inventive concept(s) is directed to a method of providing a range of food and/or beverage products, each being disposed in a flexible pouch constructed in accordance with the presently disclosed inventive concept(s). The range may include a plurality of individual packaged products and/or a plurality of kits containing the individual packaged products. In the method, a range that includes a plurality of different food and/or beverage products, each being disposed in a flexible pouch and produced as described in detail herein above, are provided. At least two of the products present in the plurality of different products differ from one another in the types of food and/or beverage products provided and/or the age range/stage to which the products are directed. The range of food and/or beverage products in the flexible pouches constructed in accordance with the presently disclosed inventive concept(s) is displayed for perusal by consumers, so that a consumer can select one or more products from the range. The range of products is displayed with a desired visual appearance based upon the structures of the flexible pouches, which provide greater stability when in the upright position.

The combinations of any of the method steps described herein above may be performed simultaneously or wholly or partially sequentially. In addition, the exemplary sequences of method steps provided herein above are for the purposes of illustration only; it will be understood that the individual steps, as well as the particular order of steps, may vary, and the sequence of steps may be performed in any order, so long as the materials and packages described herein are capable of functioning in accordance with the presently disclosed inventive concept(s).

Thus, in accordance with the presently disclosed inventive concept(s), there has been provided recyclable flexible pouches, packaged products and kits formed therefrom, as well as methods of producing and using same, that fully satisfy the objectives and advantages set forth herein above. Although the presently disclosed inventive concept(s) has been described in conjunction with the specific language set forth herein above, it is evident that many alternatives, modifications, and variations will be apparent to those skilled in the art. Accordingly, it is intended to embrace all such alternatives, modifications, and variations that fall within the scope of the appended claims. Changes may be made in the construction and the operation of the various components, elements, and assemblies described herein, as well as in the steps or the sequence of steps of the methods described herein, without departing from the scope of the appended claims.

## Claims

1. A recyclable package for a product, the package comprising:
a flexible pouch body (10) defining a chamber into which a product may be disposed, the pouch body having a front wall (14) and a rear wall (16) each formed of a plurality of flexible layers of different materials, each wall comprising at least an inner layer (60, 66), an intermediate layer (62, 68), and an outer layer (64, 70), united with one another,
said recyclable package being **characterized in that** the union of the intermediate layer and the outer layer has a union strength less than the strength of the union between the intermediate layer and the inner layer such that the intermediate layer and the outer layer can be selectively peeled from the inner layer, and **in that** the pouch body has an opening defining a flow passage for dispensing the product into or from the pouch body.

2. The package of claim 1, wherein the intermediate layer and the outer layer are united with one another across at least a portion of their surface.

3. The package of claim 1 or claim 2, wherein the intermediate layer and the inner layer are united with one another across at least a portion of their surface.

4. The package of any one of claims 1 - 3, further comprising a first tear-line (92) in the outer layer of the pouch body.

5. The package of claim 4 further comprising a second tear-line in the intermediate layer of the pouch body.

6. The package of any one of claims 1 - 3, further comprising a first tear-away strip (112) integral with the outer layer of the pouch body.

7. The package of claim 6 further comprising a second tear-away strip integral with the intermediate layer of the pouch body.

8. The package of claim 1, said package being flexible and further comprising:
-- means for assisting in the removal of one or more of the inner layer, the intermediate layer, and the outer layer from one another.

9. The package of claim 8, wherein the means for assisting in the removal of one or more of the inner layer, the intermediate layer, and the outer layer from one another comprises an unconnected portion (80) associated with at least one of the inner layer, the intermediate layer, and the outer layer.

10. The package of claim 8 or claim 9, wherein the means for assisting in the removal of one or more of the inner layer, the intermediate layer, and the outer layer from one another comprises a cut (90) associated with at least one of the inner layer, the intermediate layer, and the outer layer.

11. The package of claim 10, further comprising a tear-line (92) associated with the cut.

12. The package of any one of claims 8 - 11, wherein the means for assisting in the removal of one or more of the inner layer, the intermediate layer, and the outer layer from one another comprises a removal tab (100) associated with at least one of the inner layer, the intermediate layer, and the outer layer.

13. The package of any one of claims 8-12, wherein the means for assisting in the removal of one or more of the inner layer, the intermediate layer, and the outer layer from one another comprises a score-line (110) associated with at least one of the inner layer, the intermediate layer, and the outer layer.

14. The package of claim 8 or claim 9, wherein the means for assisting in the removal of one or more of the inner layer, the intermediate layer, and the outer layer from one another is selected from the group consisting of an unconnected portion, a cut, a tear-line and a cut, a removal tab, a score-line, a tear-away strip, and combinations thereof, associated with at least one of the inner layer, the intermediate layer, and the outer layer.

15. The package of any one of claims 8-14, wherein at least one of the intermediate layer and the outer layer; or the intermediate layer and the inner layer, are united with one another across at least a portion of their surface.

16. The package of any one of claims 1-15, further comprising a cap (52) releasably attached to the opening in the upper end of the flexible pouch.

17. The package of any one of claims 1-15, wherein the product is selected from the group consisting of baby food, juice, fruit and/or vegetable purees, beverages, beverage concentrate and/or drink mixes, other liquid products, condiments, granulated products, processed meat and/or poultry, pet food, pet treats, pet supplies, refrigerated/frozen foods, dairy products, candy and confectionary items, baking supplies, puddings, creams, vegetables, fruit, vegetable and/or fruit-based products, health food products, baked goods, dried fruits and/or nuts, snack foods, breakfast foods, cleaning and other household supplies, health and beauty products, pharmaceutical products, and combinations thereof.

## Patentansprüche

1. Recycelbare Verpackung für ein Produkt, wobei die Verpackung Folgendes umfasst:
-- einen flexiblen Beutelkörper (10), der eine Kammer definiert, in der ein Produkt angeordnet werden kann, wobei der Beutelkörper eine Vorderwand (14) und eine Rückwand (16) aufweist, die jeweils aus einer Mehrzahl von flexiblen Schichten unterschiedlicher Materialien gebildet sind, wobei jede Wand mindestens eine Innenschicht (60, 66), eine Zwischenschicht (62, 68) und eine Außenschicht (64, 70) umfasst, die miteinander verbunden sind,
wobei die recycelbare Verpackung **dadurch gekennzeichnet ist, dass**
die Verbindung der Zwischenschicht und der Außenschicht eine Verbindungsfestigkeit aufweist, die geringer ist als die Festigkeit der Verbindung zwischen der Zwischenschicht und der Innenschicht, so dass die Zwischenschicht und die Außenschicht selektiv von der Innenschicht abgezogen werden können,
und **dadurch, dass**
der Beutelkörper eine Öffnung aufweist, die einen Strömungsdurchgang zum Abgeben des Produkts in den oder aus dem Beutelkörper definiert.

2. Verpackung nach Anspruch 1, wobei die Zwischenschicht und die Außenschicht über mindestens einen Abschnitt ihrer Oberfläche miteinander verbunden sind.

3. Verpackung nach Anspruch 1 oder Anspruch 2, wobei die Zwischenschicht und die Innenschicht über mindestens einen Abschnitt ihrer Oberfläche miteinander verbunden sind.

4. Verpackung nach einem der Ansprüche 1 bis 3, die ferner eine erste Aufreißlinie (92) in der Außenschicht des Beutelkörpers umfasst.

5. Verpackung nach Anspruch 4, die ferner eine zweite Aufreißlinie in der Zwischenschicht des Beutelkörpers umfasst.

6. Verpackung nach einem der Ansprüche 1 bis 3, die ferner einen ersten Abreißstreifen (112) umfasst, der einstückig mit der Außenschicht des Beutelkörpers ausgebildet ist.

7. Verpackung nach Anspruch 6, die ferner einen zweiten Abreißstreifen umfasst, der einstückig mit der Zwischenschicht des Beutelkörpers ausgebildet ist.

8. Verpackung nach Anspruch 1, wobei die Verpackung flexibel ist und ferner aufweist:
-- Mittel zum Unterstützen der Entfernung einer oder mehrerer der Innenschicht, der Zwischenschicht und der Außenschicht voneinander.

9. Verpackung nach Anspruch 8, wobei das Mittel zum Unterstützen der Entfernung einer oder mehrerer der Innenschicht, der Zwischenschicht und der Außenschicht voneinander einen nicht verbundenen Abschnitt (80) umfasst, der mindestens einer der Innenschicht, der Zwischenschicht und der Außenschicht zugeordnet ist.

10. Verpackung nach Anspruch 8 oder Anspruch 9, wobei das Mittel zum Unterstützen der Entfernung einer oder mehrerer der Innenschicht, der Zwischenschicht und der Außenschicht voneinander einen Schnitt (90) umfasst, der mindestens einer der Innenschicht, der Zwischenschicht und der Außenschicht zugeordnet ist.

11. Verpackung nach Anspruch 10, die ferner eine Aufreißlinie (92) umfasst, die dem Schnitt zugeordnet ist.

12. Verpackung nach einem der Ansprüche 8 bis 11, wobei das Mittel zum Unterstützen der Entfernung einer oder mehrerer der Innenschicht, der Zwischenschicht und der Außenschicht voneinander eine Entfernungslasche (100) umfasst, die mindestens einer der Innenschicht, der Zwischenschicht und der Außenschicht zugeordnet ist.

13. Verpackung nach einem der Ansprüche 8 bis 12, wobei das Mittel zum Unterstützen der Entfernung einer oder mehrerer der Innenschicht, der Zwischenschicht und der Außenschicht voneinander eine Kerblinie (110) umfasst, die mindestens einer der Innenschicht, der Zwischenschicht und der Außenschicht zugeordnet ist.

14. Verpackung nach Anspruch 8 oder Anspruch 9, wobei das Mittel zum Unterstützen der Entfernung einer oder mehrerer der Innenschicht, der Zwischenschicht und der Außenschicht voneinander aus der Gruppe ausgewählt ist, bestehend aus einem nicht verbundenen Abschnitt, einem Schnitt, einer Aufreißlinie und einem Schnitt, einer Entfernungslasche, einer Kerblinie, einem Abreißstreifen und Kombinationen davon, die mindestens einer der Innenschicht, der Zwischenschicht und der Außenschicht zugeordnet sind.

15. Verpackung nach einem der Ansprüche 8 bis 14, wobei mindestens eine der Zwischenschicht und der Außenschicht; oder die Zwischenschicht und die Innenschicht, über mindestens einen Abschnitt ihrer Oberfläche miteinander verbunden sind.

16. Verpackung nach einem der Ansprüche 1 bis 15, die ferner eine Kappe (52) umfasst, die lösbar an der Öffnung in dem oberen Ende des flexiblen Beutels befestigt ist.

17. Verpackung nach einem der Ansprüche 1 bis 15, wobei das Produkt ausgewählt ist aus der Gruppe, bestehend aus Babynahrung, Saft, Obst- und/oder Gemüsepürees, Getränken, Getränkekonzentrat und/oder Getränkemischungen, anderen flüssigen Produkten, Würzmitteln, granulierten Produkten, verarbeitetem Fleisch und/oder Geflügel, Haustierfutter, Haustierleckerlis, Haustierversorgungsmitteln, gekühlten/tiefgekühlten Nahrungsmitteln, Molkereiprodukten, Süßigkeiten und Konditorartikeln, Backzutaten, Puddings, Cremes, Gemüse, Obst, gemüse- und/oder obstbasierten Produkten, Reformkostprodukten, Backwaren, Trockenfrüchten und/oder Nüssen, Snack-Lebensmitteln, Frühstücksnahrungsmitteln, Reinigungs- und anderen Haushaltsmitteln, Gesundheits- und Schönheitsprodukten, pharmazeutischen Produkten und Kombinationen davon.

## Revendications

1. Conditionnement recyclable pour un produit, le conditionnement comprenant :
-- un corps de sachet souple (10) définissant une chambre dans laquelle un produit peut être disposé, le corps de sachet ayant une paroi avant (14) et une paroi arrière (16) chacune formée d'une pluralité de couches souples de matériaux différents, chaque paroi comprenant au moins une couche interne (60, 66), une couche intermédiaire (62, 68) et une couche externe (64, 70), jointes les unes aux autres,
ledit conditionnement recyclable étant **caractérisé en ce que**
la jonction de la couche intermédiaire et de la couche externe a une résistance de jonction inférieure à la résistance de la jonction entre la couche intermédiaire et la couche interne de telle sorte que la couche intermédiaire et la couche externe peuvent être sélectivement détachées de la couche interne,
et **en ce que**
le corps de sachet possède une ouverture définissant un passage d'écoulement pour distribuer le produit dans ou depuis le corps de sachet.

2. Conditionnement selon la revendication 1, dans lequel la couche intermédiaire et la couche externe sont jointes l'une à l'autre sur au moins une partie de leur surface.

3. Conditionnement selon la revendication 1 ou la revendication 2, dans lequel la couche intermédiaire et la couche interne sont jointes l'une à l'autre sur au moins une partie de leur surface.

4. Conditionnement selon l'une quelconque des revendications 1 à 3, comprenant en outre une première ligne de déchirure (92) dans la couche externe du corps de sachet.

5. Conditionnement selon la revendication 4, comprenant en outre une deuxième ligne de déchirure dans la couche intermédiaire du corps de sachet.

6. Conditionnement selon l'une quelconque des revendications 1 à 3, comprenant en outre une première bande de déchirure (112) intégrée à la couche externe du corps de sachet.

7. Conditionnement selon la revendication 6 comprenant en outre une seconde bande de déchirure intégrée à la couche intermédiaire du corps de sachet.

8. Conditionnement selon la revendication 1, ledit conditionnement étant souple et comprenant en outre :
-- des moyens pour aider à retirer une ou plusieurs de la couche interne, de la couche intermédiaire et de la couche externe l'une de l'autre.

9. Conditionnement selon la revendication 8, dans lequel les moyens pour aider à retirer une ou plusieurs de la couche interne, de la couche intermédiaire et de la couche externe l'une de l'autre comprennent une partie non connectée (80) associée à au moins l'une de la couche interne, de la couche intermédiaire et de la couche externe.

10. Conditionnement selon la revendication 8 ou la revendication 9, dans lequel les moyens pour aider à retirer une ou plusieurs de la couche interne, de la couche intermédiaire et de la couche externe l'une de l'autre comprennent une découpe (90) associée à au moins l'une de la couche interne, de la couche intermédiaire et de la couche externe.

11. Conditionnement selon la revendication 10, comprenant en outre une ligne de déchirure (92) associée à la découpe.

12. Conditionnement selon l'une quelconque des revendications 8 à 11, dans lequel les moyens pour aider à retirer une ou plusieurs de la couche interne, de la couche intermédiaire et de la couche externe l'une de l'autre comprennent une languette de retrait (100) associée à au moins l'une de la couche interne, de la couche intermédiaire et de la couche externe.

13. Conditionnement selon l'une quelconque des revendications 8 à 12, dans lequel les moyens pour aider à retirer une ou plusieurs de la couche interne, de la couche intermédiaire et de la couche externe l'une de l'autre comprennent une ligne d'entaille (110) associée à au moins l'une de la couche interne, de la couche intermédiaire et de la couche externe.

14. Conditionnement selon la revendication 8 ou la revendication 9, dans lequel les moyens pour aider à retirer une ou plusieurs de la couche interne, de la couche intermédiaire et de la couche externe l'une de l'autre sont choisis dans le groupe constitué d'une partie non connectée, d'une découpe, d'une ligne de déchirure et d'une découpe, d'une languette de retrait, d'une ligne d'entaille, d'une bande de déchirure et de combinaisons de ceux-ci, associés à au moins l'une de la couche interne, de la couche intermédiaire et de la couche externe.

15. Conditionnement selon l'une quelconque des revendications 8 à 14, dans lequel au moins l'une de la couche intermédiaire et de la couche externe ; ou de la couche intermédiaire et de la couche interne sont jointes l'une à l'autre sur au moins une partie de leur surface.

16. Conditionnement selon l'une quelconque des revendications 1 à 15, comprenant en outre un capuchon (52) fixé de manière amovible à l'ouverture dans l'extrémité supérieure du sachet souple.

17. Conditionnement selon l'une quelconque des revendications 1 à 15, dans lequel le produit est choisi dans le groupe constitué d'aliments pour bébé, jus, purées de fruits et/ou légumes, boissons, concentré de boisson et/ou mélanges à boire, autres produits liquides, condiments, produits granuleux, viande et/ou volaille transformées, aliments pour animaux de compagnie, friandises pour animaux de compagnie, alimentation pour animaux de compagnie, aliments réfrigérés/congelés, produits laitiers, bonbon et articles de confiserie, articles de boulangerie, puddings, crèmes, légumes, fruits, produits à base de légumes et/ou fruits, produits alimentaires sains, produits cuits, fruits secs et/ou fruits à coque, aliments pour en-cas, aliments pour petit-déjeuner, fournitures de nettoyage et autres fournitures à usage ménager, produits pour la santé et la beauté, produits pharmaceutiques et leurs combinaisons.
